# FASCICULE DE BREVET EUROPEEN

(11) **EP 0 267 106 B1**
(45) Date de publication et mention de la délivrance du brevet: **19.01.1994**
(21) Numéro de dépôt: 87402441.7
(22) Date de dépôt: 29.10.1987
(51) Int. Cl.: H01M 6/16, H01M 6/18, H01B 1/12

(54) **Matériau à conduction ionique**
Ionenleitendes Material
Ion-conducting material

(30) Priorité: 30.10.1986 FR 8615113
(43) Date de publication de la demande: 11.05.1988
(73) Titulaire: SOCIETE NATIONALE ELF AQUITAINE, 92400 Courbevoie (FR); HYDRO-QUEBEC, Montreal, Québec H2Z 1A4 (CA)
(72) Inventeur: Armand, Michel, F-38410 St Martin D'Uriage (FR); Gauthier, Michel, La Prairie, QC (CA); Muller, Daniel, F-64000 Pau (FR)
(74) Mandataire: Boillot, Marc

(56) Documents cités:
- EP-A- 0 189 891
- EP-A- 0 199 175
- EP-A- 0 260 847
- DE-A- 2 831 163

## Description

L'invention concerne un nouveau matériau à conduction ionique, qui peut être liquide ou solide et qui est constitué d'une solution d'un sel dans un solvant, ledit solvant comportant un dérivé sulfoné particulier.

On a déjà proposé d'utiliser des dérivés sulfonés comme composantes d'électrolytes pour certaines batteries. Ainsi dans la citation EP-A-0199175, qui décrit une batterie comportant une cathode, une anode à base d'un polymère conjugué et d'un matériau apte à former un alliage ou un compose d'insertion avec un metal alcalin et un électrolyte liquide formé d'une solution d'un sel de métal alcalin dans un solvant organique, il est mentionné (colonne 15, ligne 39) que le solvant organique de l'électrolyte liquide peut consister en tétraéthylsulfamide. Egalement, dans la citation DE-A-2831163, qui concerne une batterie du type métal alcalin/soufre susceptible de fonctionner à des températures de 100°C à 200°C et qui comporte un compartiment anodique renfermant un métal alcalin tel que le sodium, un compartiment cathodique, qui renferme du soufre et/ou un polysulfure du métal alcalin et un solvant organique polaire susceptible de dissoudre au moins les sulfures alcalins, et un électrolyte solide séparant lesdits compartiments et consistant en une céramique à conduction par les ions alcalins, on indique (page 15, lignes 13-14) que le solvant présent dans le compartiment cathodique peut renfermer de la tétraméthylsulfamide.

L'invention a pour objet un nouveau matériau à conduction ionique, qui est du type choisi dans le groupe formé de (i) les solutions solides d'un sel dans un solvant consistant en un matériau macromoléculaire et (ii) les solutions, dans un solvant liquide, d'un composé pris parmi les dérivés de formules M(RF-SO₂-A-SO₂-R'F), M(RF-SO₂-A-CO-R'F), M(RF-CO-A-CO-R'F) et 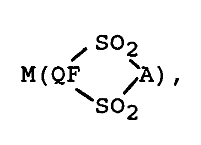
où M désigne un métal alcalin, alcalino-terreux, un métal de transition ou une terre rare, QF est un radical divalent en C₂ à C₆ et notamment un radical perfluoré, RF et R'F, identiques ou différents, représentent chacun un radical alkyle ou aryle en C₁ à C₁₂, ledit radical étant avantageusement perhalogéné et de préférence perfluoré, et A représente un atome d'azote ou un groupement CR dans lequel R est un atome d'hydrogène ou un radical alkyle en C₁ à C₃₀, ledit matériau à conduction ionique se caractérisant en ce que le solvant des solutions solides (i) ou des solutions liquides (ii) comporte un dérivé sulfoné de formule (I) 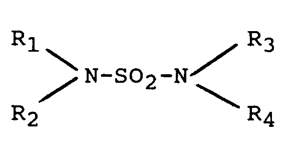
dans laquelle les R₁, R₂, R₃ et R₄, identiques ou différents, représentent chacun un radical alkyle ou oxaalkyle ayant de 1 à 10 atomes de carbone.

Dans la formule (I) représentant le dérivé sulfoné, les symboles R₁ et R₂ sont de préférence identiques et représentent un radical méthyle, alors que les R₃ et R₄ désignent chacun un radical éthyle. De préférence encore, les quatre radicaux R₁, R₂, R₃ et R₄ sont des radicaux éthyle.

Lorsque le matériau à conduction ionique est du type solution solide d'un sel dans un solvant consistant en un matériau macromoléculaire, ledit sel peut être un sel métallique dérivé d'un acide fort. Un tel sel peut être choisi parmi les sels décrits dans la citation EP-A-0013199 intitulée : "Générateurs électrochimiques de production de courant et matériaux pour leur fabrication" ou encore parmi les sels décrits dans le brevet français 2587602, le brevet français 2527610 ou encore le brevet français 2527611.

En particulier, le sel peut être constitué d'un dérivé représenté par l'une des formules M(RF-SO₂-A-SO₂-R'F), M(RF-SO₂-A-CO-R'F), M(RF-CO-A-CO-R'F) et 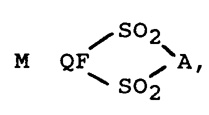
qui ont été définies plus haut.

Dans le matériau à conduction ionique du type solution solide d'un sel dans un matériau macromoléculaire, par exemple électrolyte solide du type décrit dans la citation EP-A-0013199, le dérivé sulfoné de formule (I) joue le rôle d'un agent plastifiant, c'est-à-dire qu'il permet de prévenir ou du moins de limiter les changements de phase du polymère par lesquels le polymère devient cristallin.

Dans ce mode de réalisation du matériau à conduction ionique, le matériau macromoléculaire peut être choisi parmi ceux décrits dans la citation EP-A-0013199, c'est-à-dire parmi les polymères constitués par des homo ou copolymères contenant des chaînes comprenant au moins un atome d'oxygène ou d'azote, par quatre ou deux atomes de carbones. Ces hétéro-atomes peuvent participer directement à la création de la chaîne ou encore être liés, latéralement, à des atomes de carbone d'une chaîne principale.

Ces matériaux macromoléculaires peuvent donc être choisis parmi les poly étheroxydes ou encore parmi les polyphosphazènes.

A titre d'exemple, le matériau macromoléculaire peut dériver de motifs monomères du type représenté
- soit par la formule suivante : 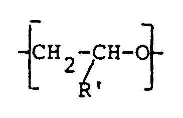 dans laquelle R' représente un atome d'hydrogène ou l'un des groupes Ra, -CH₂-O-Ra, -CH₂-O-Re-Ra, -CH₂-N = (CH₃)₂ avec Ra représentant un radical alkyle ou cycloalkyle comportant notamment 1 à 16, de préférence 1 à 4 atomes de carbone,
   Re représentant un radical polyéther de formule générale -(CH₂-CH₂-O)ₚ-, p ayant une valeur de 1 à 100, notamment de 1 à 2,
- soit par la formule suivante : 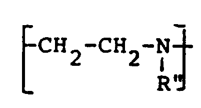 dans laquelle R'' représente Ra, -Re-Ra, avec Ra et Re ayant respectivement l'une des significations sus-indiquées,
- soit par la formule suivante : 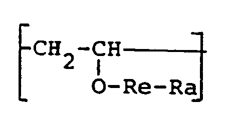 dans laquelle Ra et Re ont respectivement l'une des significations sus-indiquées. Ce matériau macromoléculaire est de préférence un matériau élastomère amorphe, isotrope, dérivé de motifs monomères du type représenté
- soit par la formule suivante : 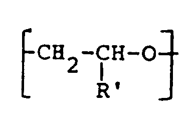 dans laquelle R' représente l'un des groupes Ra, -CH₂-O-Ra, -CH₂-O-Re-Ra, -CH₂-N = (CH₃)₂, avec Ra représentant un radical alkyle ou cycloalkyle comportant notamment 1 à 12, de préférence 1 à 4 atomes de carbone,
   Re représentant un radical polyéther de formule générale -(CH₂-CH₂-O)ₚ-, p ayant une valeur de 1 à 10,
- soit par la formule suivante : 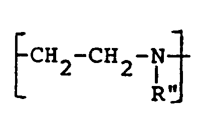 dans laquelle R'' représente Ra, -Re-Ra, avec Ra et Re ayant respectivement l'une des significations sus-indiquées,
- soit par la formule suivante : 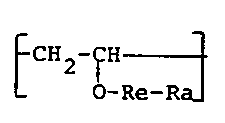 dans laquelle Ra et Re ont respectivement l'une des significations sus-indiquées.

Le matériau à conduction ionique selon l'invention peut être utilisé comme électrolyte, liquide ou solide pour la réalisation de générateurs électrochimiques de production de courant électrique, tant primaires que secondaires, mais il peut aussi trouver toute utilisation mettant en oeuvre la mobilité ionique du sel en solution.

Pour la réalisation de générateurs électrochimiques, il peut être utilisé en tant qu'électrolyte solide, mais aussi en tant que composant d'une électrode composite, c'est-à-dire d'une électrode dans laquelle chaque grain de matière active est enrobée dudit matériau à conduction ionique telle que décrite dans la citation EP-A-0013199.

De façon à illustrer l'invention, on donne ci-après des exemples comparatifs.

On a tout d'abord réalisé un générateur électrochimique, générateur (1), comprenant une électrode négative constituée par un feuillard de lithium, une électrode positive à base de TiS₂ et un électrolyte constitué par du perchlorate de lithium en solution, dans un copolymère d'oxyde d'éthylène et de méthylglycidyléther.

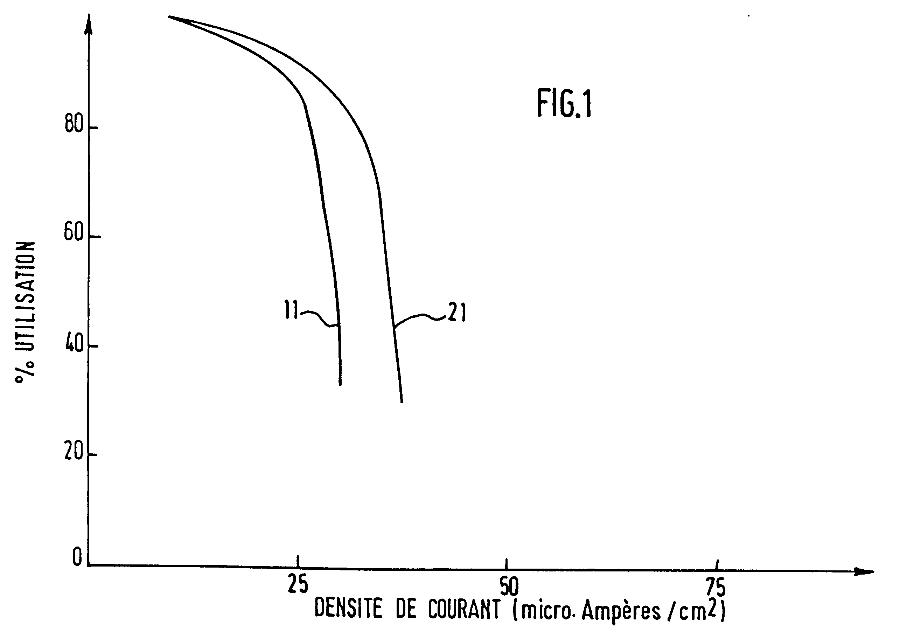

On a représenté sur la figure 1 la courbe (11) qui donne le pourcentage d'utilisation en fonction de la densité du courant de décharge.

On a ensuite réalisé le même générateur (générateur 2) mais pour lequel l'électrolyte contenait 10 %, en poids par rapport au polymère, d'un solvant selon l'invention représenté par la formule suivante : 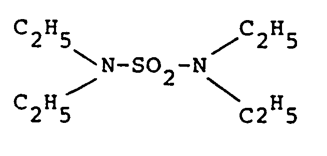
Ce solvant est dénommé tétraéthylsulfonamide (TESA).

On a représenté sur la même figure 1 la courbe (21) correspondant à ce générateur (2). On remarque que cette courbe est décalée par rapport à la courbe (1) d'environ 5 %, ce qui démontre une amélioration de l'utilisation du générateur selon l'invention.

On a ensuite réalisé le générateur (3) suivant.

L'électrode positive et l'électrode négative sont similaires à celles des générateurs (1) et (2). L'électrolyte est le même que celui du générateur (2) mais on a remplacé le perchlorate de lithium par un imidure de lithium (en abrégé TFSl) de formule : (CF₃SO₂)₂N Li tel que décrit dans le brevet US n^{o} 4.505.997. Ce générateur comportait donc 10 % en poids de TESA par rapport au poids total de polymère.

Le générateur n^{o} 3 avait une capacité d'électrode positive de 2 C/cm².

On a réalisé enfin un générateur n^{o} 4 identique au générateur n^{o} 3 mais avec une capacité d'électrode positive égal à 1 C/cm².

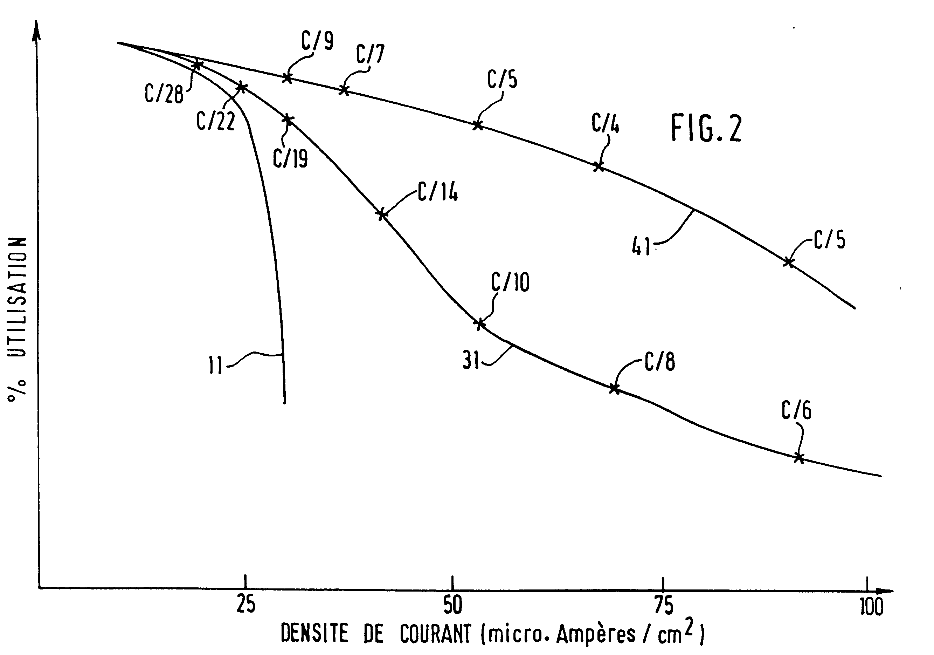

On a représenté sur la figure 2, la variation du taux d'utilisation en fonction de la densité du courant de décharge pour le générateur n^{o} 1 (11), pour le générateur n^{o} 3 (31) et pour le générateur n^{o} 4 (41), les essais étant effectués à 25°C.

Sur les courbes (41) et (31), on a aussi indiqué les régimes de décharge (par exemple C/10) qui indiquent le temps pendant laquelle la pile a été déchargée.

On remarque, à la lecture de ces courbes, que l'on a encore amélioré le taux de décharge et que l'on a donc des générateurs puissants. On a aussi vérifié que l'on obtenait la même amélioration du taux de décharge pour des températures allant jusqu'à moins dix degrés C.

## Revendications

1. Matériau à conduction ionique choisi dans le groupe formé de (i) les solutions solides d'un sel dans un solvant consistant en un matériau macromoléculaire et (ii) les solutions, dans un solvant liquide, d'un composé pris parmi les dérivés de formules M(RF-SO₂-A-SO₂-R'F), M(RF-SO₂-A-CO-R'F), M(RF-CO-A-CO-R'F) et 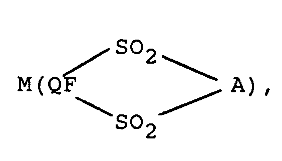 où M désigne un métal alcalin, alcalino-terreux, un métal de transition ou une terre rare, QF est un radical divalent en C₂ à C₆ et notamment un radical perfluoré, RF et R'F, identiques ou différents, représentent chacun un radical alkyle ou aryle en C₁ à C₁₂, ledit radical étant avantageusement perhalogéné et de préférence perfluoré, et A représente un atome d'azote ou un groupement CR dans lequel R est un atome d'hydrogène ou un radical alkyle en C₁ à C₃₀, ledit matériau à conduction ionique se caractérisant en ce que le solvant des solutions solides (i) ou des solutions liquides (ii) comporte un dérivé sulfoné de formule (I) 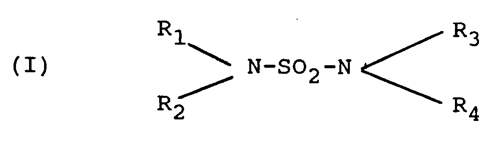 dans laquelle les R₁, R₂, R₃ et R₄, identiques ou différents, représentent chacun un radical alkyle ou oxa-alkyle ayant de 1 à 10 atomes de carbone.

2. Matériau à conduction ionique selon la revendication 1, caractérisé en ce que, R₁ et R₂ représentent un radical méthyle.

3. Matériau à conduction ionique selon la revendication 2, caractérisé en ce que R₃ et R₄ représentent chacun un radical éthyle.

4. Matériau à conduction ionique selon la revendication 1, caractérisé en ce que les quatre radicaux R₁, R₂, R₃ et R₄ représentent chacun un radical éthyle.

5. Matériau à conduction ionique selon l'une des revendications 1 à 4, caractérisé en ce qu'il consiste en une solution solide d'un sel dans un matériau macromoléculaire pour laquelle ledit sel est un sel d'acide fort.

6. Matériau à conduction ionique selon l'une des revendications 1 à 5, caractérisé en ce qu'il consiste en une solution solide d'un sel dans un matériau macromoléculaire pour laquelle ledit matériau macromoléculaire est un polymère constitué d'un homo ou d'un copolymère dérivés de motifs monomères comprenant au moins un atome d'oxygène ou d'azote.

7. Matériau à conduction ionique selon la revendication 6, caractérisé en ce que ledits motifs monomères comprennent au moins un atome d'oxygène ou d'azote pour quatre atomes de carbone.

8. Matériau à conduction ionique selon la revendication 6, caractérisé en ce que le matériau macromoléculaire est choisi dans le groupe formé des polyétheroxydes et des polyphosphazènes.

9. Matériau à conduction ionique selon la revendication 6, caractérisé en ce que le matériau macromoléculaire dérive de motifs monomères répondant à l'une ou l'autre des formules 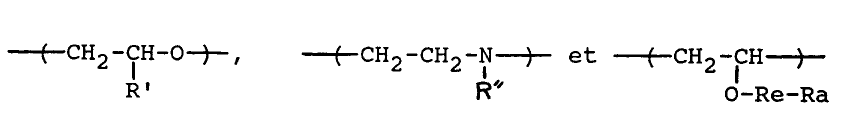 dans lesquelles R' représente un atome d'hydrogène ou l'un des groupes Ra, -CH₂-O-Ra, -CH₂-O-Re-Ra et 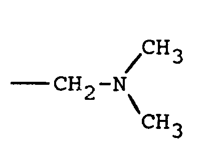 et R'' représente un groupe Ra ou Re-Ra, avec Ra désignant un radical alkyle ou cycloalkyle comportant notamment 1 à 16 et de préférence 1 à 4 atomes de carbone et Re représentant un radical polyéther de formule 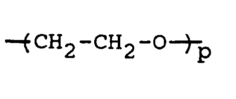 où p a une valeur de 1 à 100 et notamment de 1 à 2.

10. Matériau à conduction ionique selon la revendication 6, caractérisé en ce que le matériau macromoléculaire est un matériau élastomère amorphe, isotrope, dérivé de motifs monomères répondant à l'une ou l'autre des formules 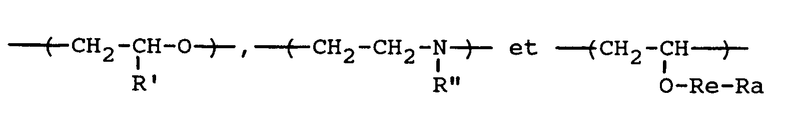 dans lesquelles R' représente l'un des groupes Ra, -CH₂-O-Ra, -CH₂-O-Re-Ra, 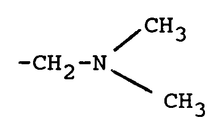 et R'' désigne un groupe Ra ou Re-Ra, avec Ra représentant un radical alkyl ou cycloalkyle comportant notamment 1 à 12 et de préférence 1 à 4 atomes de carbone et Re représentant un radical polyéther de formule 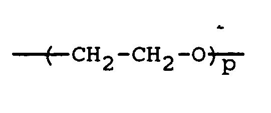 où p a une valeur de 1 à 10.

11. Matériau à conduction ionique selon l'une des revendications 5 à 10, caractérisé en ce que le sel d'acide fort est choisi parmi les dérivés de formules M(RF-SO₂-A-SO₂-R'F), M(RF-SO₂-A-CO-R'F), M(RF-CO-A-CO-R'F) et 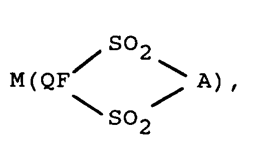 où M désigne un métal alcalin, alcalino-terreux, un métal de transition ou une terre rare, QF est un radical divalent en C₂ à C₆ et notamment un radical perfluoré, RF et R'F, identiques ou différents, représentent chacun un radical alkyle ou aryle en C₁ à C₁₂, ledit radical étant avantageusement perhalogéné et de préférence perfluoré et A représente un atome d'azote ou un groupement CR dans lequel R est un atome d'hydrogène ou un radical alkyle en C₁ à C₃₀.

12. Matériau à conduction ionique selon l'une des revendications 5 à 10 caractérisé en ce que le sel d'acide fort est choisi parmi LiClO₄ et (CF₃SO₂)₂NLi.

13. Application du matériau à conduction ionique selon l'une des revendications 1 à 12, à la réalisation de générateurs électrochimiques primaires ou secondaires de courant électrique.

## Claims

1. Ionically conductive material selected from the group consisting of (i) solid solutions of a salt in a solvent consisting of a macromolecular material and (ii) solutions in a liquid solvent of a compound taken from derivatives of the formulae M(RF-SO₂-A-SO₂-R'F), M(RF-SO₂-A-CO-R'F), M(RF-CO-A-CO-R'F) and 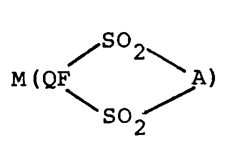 in which M indicates an alkali metal, an alkaline earth, a transition metal or a rare earth, QF is a divalent C₂ to C₆ radical, particularly a perfluorinated radical, RF and R'F are the same or different and each represents a C₁ to C₁₂ alkyl or aryl radical, the said radical advantageously being perhalogenated and preferably perfluorinated, and A represents a nitrogen atom or a CR group in which R is a hydrogen atom or a C₁ to C₃₀ alkyl radical, the said ionically conductive material being characterized in that the solvent of the solid solutions (i) or of the liquid solutions (ii) comprises a sulphonated derivative of the formula (I): 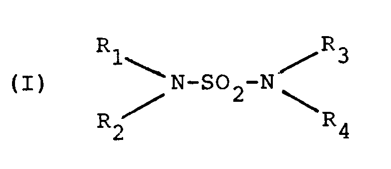 in which R₁, R₂, R₃ and R₄ are the same or different and each represents an alkyl or an oxa-alkyl radical having from 1 to 10 carbon atoms.

2. Ionically conductive material according to Claim 1, characterized in that R₁ and R₂ represent methyl radicals.

3. Ionically conductive material according to Claim 2, characterized in that each of R₃ and R₄ represents an ethyl radical.

4. Ionically conductive material according to Claim 1, characterized in that each of the four radicals R₁, R₂, R₃ and R₄ represents an ethyl radical.

5. Ionically conductive material according to any one of Claims 1 to 4, characterized in that it consists of a solid solution of a salt in a macromolecular material, in which the said salt is a salt of a strong acid.

6. Ionically conductive material according to any one of Claims 1 to 5, characterized in that it consists of a solid solution of a salt in a macromolecular material in which the said macromolecular material is a polymer constituted by a homopolymer or a copolymer derived from monomeric moieties comprising at least one oxygen or nitrogen atom.

7. Ionically conductive material according to Claim 6, characterized in that the said monomeric moieties comprise at least one oxygen or nitrogen atom per four carbon atoms.

8. Ionically conductive material according to Claim 6, characterized in that the macromolecular material is selected from the group constituted by the polyether oxides and the polyphosphazenes.

9. Ionically conductive material according to Claim 6, characterized in that the macromolecular material is derived from monomeric structures conforming to one or other of the formulae: 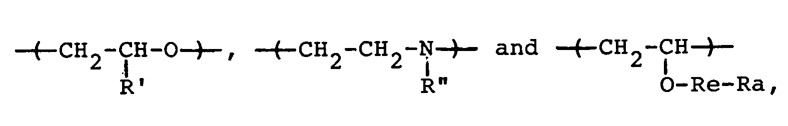 in which R' represents a hydrogen atom or an Ra, -CH₂-O-Ra, -CH₂-O-Re-Ra, or 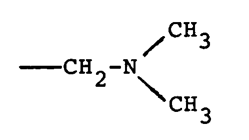 group, and R'' represents an Ra or Re-Ra group with Ra indicating an alkyl or cycloalkyl radical comprising, in particular, 1 to 16 and preferably 1 to 4 carbon atoms, and Re representing a polyether radical of the formula (̵CH₂-CH₂-O)̵ₚ where p has a value of from 1 to 100 and particularly from 1 to 2.

10. Ionically conductive material according to Claim 6, characterized in that the macromolecular material is an amorphous, isotropic, elastomeric material derived from monomeric structures conforming to one or other of the formulae: 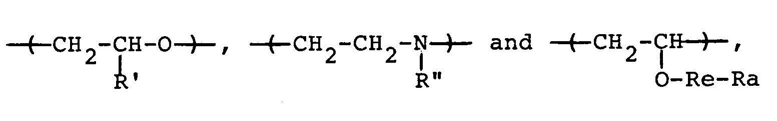 in which R' represents an Ra, -CH₂-O-Ra, -CH₂-O-Re-Ra or 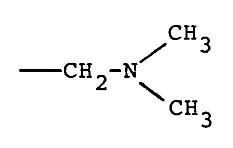 group, and R'' indicates an Ra or Re-Ra group, with Ra representing an alkyl or cycloalkyl radical comprising, in particular, from 1 to 12 and preferably from 1 to 4 carbon atoms, and Re representing a polyether radical of the formula (̵CH₂-CH₂-O)̵ₚ where p has a value of from 1 to 10.

11. Ionically conductive material according to any one of Claims 5 to 10, characterized in that the strong acid salt is selected from derivatives of the formulae M(RF-SO₂-A-SO₂-R'F), M(RF-SO₂-A-CO-R'F), M(RF-CO-A-CO-R'F), and 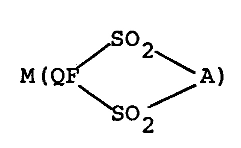 in which M indicates an alkali metal, an alkaline earth, a transition metal or a rare earth, QF is a divalent C₂ to C₆ radical, particularly a perfluorinated radical, RF and R'F are the same or different and each represents a C₁ to C₁₂ alkyl or aryl radical, the said radical advantageously being perhalogenated and, preferably, perfluorinated, and A represents a nitrogen atom or a CR group in which R is a hydrogen atom or a C₁ to C₃₀ alkyl radical.

12. Ionically conductive material according to any one of Claims 5 to 10, characterized in that the strong acid salt is selected from LiClO₄ and (CF₃SO₂)₂NLi.

13. Use of the ionically conductive material according to any one of Claims 1 to 12 for producing primary or secondary electrochemical electric-current generators.

## Patentansprüche

1. Ionenleitender Stoff, ausgewählt aus der Gruppe, gebildet aus
i) festen Lösungen eines Salzes in einem aus einem makromolekularen Stoff bestehenden Lösungsmittel und
ii) Lösungen einer Verbindung, ausgewählt unter Derivaten der Formeln M(RF-SO₂-A-SO₂-R'F), M(RF-SO₂-A-CO-R'F), M(RF-CO-A-CO-R'F) und 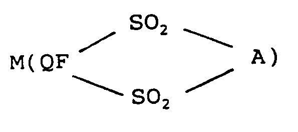 in einem flüssigen Lösungsmittel, worin M ein Alkali-, Erdalkali-, Übergangs- oder Seltenerdmetall bezeichnet, QF einen zweiwertigen C₂₋₆-Rest und insbesondere einen perfluorierten Rest bedeutet, RF und R'F gleich oder verschieden sind und jeweils einen C₁₋₁₂-Alkylrest oder -Arylrest darstellen, wobei dieser Rest vorteilhafterweise perhalogeniert und insbesondere perfluoriert ist, und A ein Stickstoffatom oder eine Gruppe CR bedeutet, worin R für ein H-Atom oder einen C₁₋₃₀-Alkylrest steht, dadurch **gekennzeichnet,** daß das Lösungsmittel für die festen Lösungen i) bzw. flüssigen Lösungen ii) ein sulfoniertes Derivat der Formel (I) 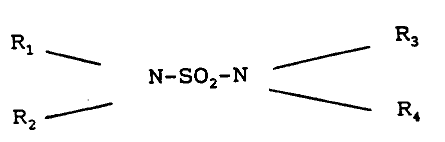 enthält, worin R₁, R₂, R₃ und R₄ gleich oder verschieden sind und jeweils einen C₁₋₁₀-Alkyl- oder Oxaalkylrest darstellen.

2. Ionenleitender Stoff nach Anspruch 1, dadurch **gekennzeichnet,** daß R₁ und R₂ einen Methylrest darstellen.

3. Ionenleitender Stoff nach Anspruch 2, dadurch **gekennzeichnet,** daß R₃ und R₄ jeweils einen Ethylrest darstellen.

4. Ionenleitender Stoff nach Anspruch 1, dadurch **gekennzeichnet,** daß R₁, R₂, R₃ und R₄ jeweils einen Ethylrest darstellen.

5. Ionenleitender Stoff nach einem der Ansprüche 1 bis 4, dadurch **gekennzeichnet,** daß er aus einer festen Lösung eines Salzes in einem makromolekularen Stoff besteht, für die dieses Salz das Salz einer starken Säure darstellt.

6. Ionenleitender Stoff nach einem der Ansprüche 1 bis 5, dadurch **gekennzeichnet,** daß er aus einer festen Lösung eines Salzes in einem makromolekularen Stoff besteht, für die der makromolekulare Stoff ein Polymer ist, bestehend aus einem Homo- oder Copolymer, erhalten aus wenigstens ein O- oder N-Atom enthaltenden monomeren Strukturelementen.

7. Ionenleitender Stoff nach Anspruch 6, dadurch **gekennzeichnet,** daß die monomeren Strukturelemente wenigstens ein O- oder N-Atom auf jeweils vier C-Atome enthalten.

8. Ionenleitender Stoff nach Anspruch 6, dadurch **gekennzeichnet,** daß der makromolekulare Stoff ausgewählt ist aus der Gruppe der Polyetheroxide und Polyphosphazene.

9. Ionenleitender Stoff nach Anspruch 6, dadurch **gekennzeichnet,** daß der makromolekulare Stoff erhalten ist aus monomeren Strukturelementen einer der Formeln 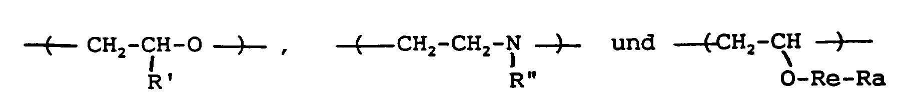 worin R' ein H-Atom oder eine der Gruppen Ra, -CH₂-O-Ra, -CH₂-O-Re-Ra und 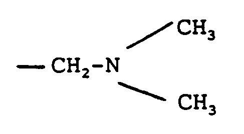 und R'' eine Gruppe Ra oder Re-Ra darstellen, wobei Ra einen Alkyl- oder Cycloalkylrest mit insbesondere 1 bis 16 und vorzugsweise 1 bis 4 C-Atomen darstellt, und Re einen Polyetherrest der Formel 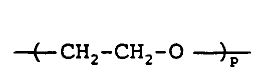 darstellt, worin p einen Wert von 1 bis 100 und insbesondere von 1 bis 2 hat.

10. Ionenleitender Stoff nach Anspruch 6, dadurch **gekennzeichnet,** daß der makromolekulare Stoff ein elastomerer, amorpher, isotroper Stoff ist, erhalten aus monomeren Strukturelementen einer der Formeln 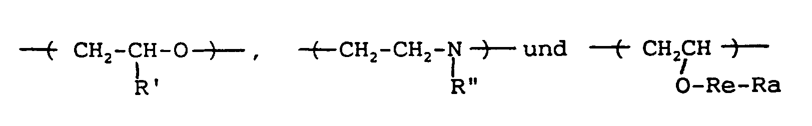 worin R' eine Gruppe Ra, -CH₂-O-Ra, -CH₂-O-Re-Ra, 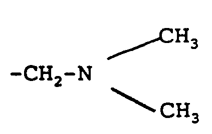 und R'' eine Gruppe Ra oder Re-Ra darstellen, wobei Ra einen Alkyl- oder Cycloalkylrest mit insbesondere 1 bis 12 und vorzugsweise 1 bis 4 C-Atomen darstellt, und Re einen Polyetherrest der Formel 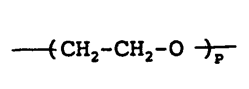 darstellt, worin p einen Wert von 1 bis 10 hat.

11. Ionenleitender Stoff nach einem der Ansprüche 5 bis 10, dadurch **gekennzeichnet,** daß das Salz der starken Säure ausgewählt ist unter den Derivaten der Formeln M(RF-SO₂-A-SO₂R'F), M(RF-SO₂-A-CO-R'F), M(RF-CO-A-CO-R'F) und 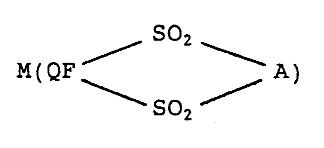 worin M ein Alkali-, Erdalkali-, Übergangs- oder Seltenerdmetall bezeichnet, QF einen zweiwertigen C₂₋₆-Rest und insbesondere einen perfluorierten Rest bedeutet, RF und R'F gleich oder verschieden sind und jeweils einen C₁₋₁₂-Alkylrest oder -Arylrest darstellen, wobei dieser Rest vorteilhafterweise perhalogeniert und insbesondere perfluoriert ist, und A ein Stickstoffatom oder eine Gruppe CR bedeutet, worin R für ein H-Atom oder einen C₁₋₃₀-Alkylrest steht.

12. Ionenleitender Stoff nach einem der Ansprüche 5 bis 10, dadurch **gekennzeichnet,** daß das Salz der starken Säure ausgewählt ist unter LiClO₄ und (CF₃SO₂)₂NLi.

13. Verwendung des ionenleitenden Stoffes nach einem der Ansprüche 1 bis 12 für die Herstellung primärer oder sekundärer elektrochemischer Stromerzeugungsgeneratoren.
